# EUROPÄISCHE PATENTSCHRIFT

(11) **EP 1 479 524 B1**
(45) Veröffentlichungstag und Bekanntmachung des Hinweises auf die Patenterteilung: **15.12.2010**
(21) Anmeldenummer: 04012101.4
(22) Anmeldetag: 21.05.2004
(51) Int. Cl.: B41J 3/407, B44C 5/04

(54) **Verfahren und Vorrichtung zum Herstellen eines Bauteils mit einer Oberfläche vorbestimmten Aussehens**
Method and device for the production of a component with a pre-determined surface appearance
Procède et dispositif permettant de réaliser un élément structurel ayant une apparence de surface predeterminee

(30) Priorität: 23.05.2003 DE 10323412
(43) Veröffentlichungstag der Anmeldung: 24.11.2004
(60) Teilanmeldung: 09001678.3
(73) Patentinhaber: Interglarion Limited, 2404 Engomi, Nikosia (CY)
(72) Erfinder: Bauer, Jörg, 88250 Weingarten (DE)
(74) Vertreter: Herzog, Markus

(56) Entgegenhaltungen:
- EP-A1- 0 602 251
- EP-A2- 1 145 859
- WO-A1-02/00449
- WO-A1-03/084760
- US-A1- 2001 019 340
- US-A1- 2003 043 246

## Beschreibung

Die Erfindung betrifft ein Verfahren zum Herstellen eines Bauteils mit einer Oberfläche vorbestimmten Aussehens gemäß dem Oberbegriff des Anspruchs 1.

Bekannt ist, zu bedruckende plattenförmige Bauteile derart herzustellen, dass ihre Oberseite in einer unmittelbar bedruckbaren Qualität hergestellt wird, beispielsweise porenfrei verpresst wird, harzbeschichtet wird oder auch mit einem Furnier versehen wird. Die Oberseite eines solchen plattenförmigen Bauteils wird dann tintenstrahlbedruckt, um der Oberseite beispielsweise das Aussehen von wertvollem Echtholz zu verleihen. Auf die wenig ansehnlichen Seitenflächen wird anschließend ein Randelement, beispielsweise ein Umleimer, aufgebracht, dessen Oberseite graphisch fertig gestaltet ist. Nach dem Aufbringen, beispielsweise Aufleimen oder thermischem Aufkleben der Leiste muss der Übergangsbereich zwischen der Randleiste und dem Bauteil mechanisch fein bearbeitet werden, wodurch an dem fertigen Bauteil jeweils sichtbar ist, dass es sich um ein mit einem Umleimer bzw. einer Randleiste versehenes Bauteil handelt.

In der WO 02/00449 A ist eine Herstellung flächiger Bauteile mit vorbestimmtem Oberflächenaussehen beschrieben, wobei auf die Oberseite und die Seitenflächen der Bauteile durch Tintenstrahlbedruckung Muster aufgebracht werden können.

Aus der DE 100 31 030 A1, von der im Oberbegriff des Anspruchs 1 ausgegangen wird, sind ein Verfahren und eine Vorrichtung zum Herstellen flächiger Bauteile mit vorbestimmtem Aussehen ihrer Oberfläche bekannt, bei dem die Flächenbauteile mittels eines hinsichtlich des sich ergebenden Aussehens programmierbaren Verfahrens zur Ausbildung eines vorbestimmten Musters bedruckt werden. Beispielsweise können aus Holz bestehende Oberflächen mit einem Muster bedruckt werden, dessen Maserung einer vorbestimmten Holzart und dessen Farbe einem vorbestimmten Farbton entspricht. Mit dem Verfahren können auch dreidimensionale Oberflächen bedruckt werden.

Aus der DE 195 32 724 A1 ist eine Mehrfarbendruckvorrichtung bekannt, die einen die Druckfarbe enthaltenden Druckkopf, beispielsweise Tintenstrahldruckkopf, und eine Führungseinrichtung für den zu bedruckenden Gegenstand enthält, mit der beliebig hohe Gegenstände dadurch bedruckt werden können, dass der Abstand zwischen der Druckeinheit und der Aufnahmefläche für den zu bedruckenden Gegenstand einstellbar ist.

In der EP 0 931 649 A2 ist eine Vorrichtung zum Bedrucken einer konturierten Oberfläche mit komplexer Topologie beschrieben, die einen beweglichen Druckkopf, beispielsweise Tintenstrahldruckkopf, zum Bedrucken der Oberfläche und einen Sensor enthält, der die Kontur der Oberfläche erfasst. Eine Steuereinrichtung betätigt den Druckkopf derart, dass er relativ zu der Oberfläche abhängig von der sensierten Kontur bewegt wird, so dass der Druckkopf der Kontur der Oberfläche in einem vorbestimmten Abstand folgt und die Oberfläche derart bedruckt wird, dass aus dem vorbestimmten Abstand gleichmäßig Tinte auf sie aufgebracht wird.

Ein Problem, das sich bei mit einer Oberfläche vorbestimmten Aussehens herzustellenden Bauteilen stellt, liegt darin, dass beispielsweise plattenförmige Bauteile, die mit einer Holzmaserung versehen werden, nicht das Aussehen von Echtholzplatten haben, da ihre Seitenflächen ebenso wie die Oberfläche zwar mit einer Holzmaserung bedruckt werden, die Holzmaserungen der Oberseite und der sichtbaren Seitenflächen jedoch nicht zusammenpassen, so dass der Betrachter von vornherein sieht, dass es sich um keine Massivholzplatte, sondern um eine furnierte Platte handelt.

Der Erfindung liegt die Aufgabe zugrunde, die vorstehende Problematik zu lösen. Der Erfindung liegt weiter die Aufgabe zugrunde, ein Verfahren anzugeben, mit dem kostengünstig Bauteile mit hochwertig aussehenden Oberflächen herstellbar sind.

Diese Aufgabe wird mit den Merkmalen des Anspruchs 1 gelöst.

Die Unteransprüche sind auf vorteilhafte Ausführungsformen und Weiterbildungen des erfindungsgemäßen Verfahrens gerichtet.

Die Erfindung wird im Folgenden anhand schematischer Zeichnungen beispielsweise und mit weiteren Einzelheiten erläutert.

Es stellen dar:
- Fig. 1: eine Prinzipdarstellung des Aufbaus einer Vorrichtung zur Durchführung des erfin- dungsgemäßen Tintenstrahldruckverfahrens,
- Fig. 2: ein Flußdiagramm zur Erläuterung der Herstellung eines nach dem erfindungsgemäßen Verfahren hergestellten Bauteils,
- Fig. 3: Teilschnitte von Bauteilen mit unterschiedlichen Rändern,
- Fig. 4: perspektivische Ansichten unterschiedlich geprägter Grundkörper,
- Fig. 5: Skizzen zur Erläuterung der Tintenstrahlbedruckung,
- Fig. 6: ein erfindungsgemäß hergestelltes Bauteil,
- Fig. 7: ein weiteres Beispiel für erfindungsgemäß hergestellte Bauteile, und
- Fig. 8: weitere erfindungsgemäß hergestellte Bauteile.

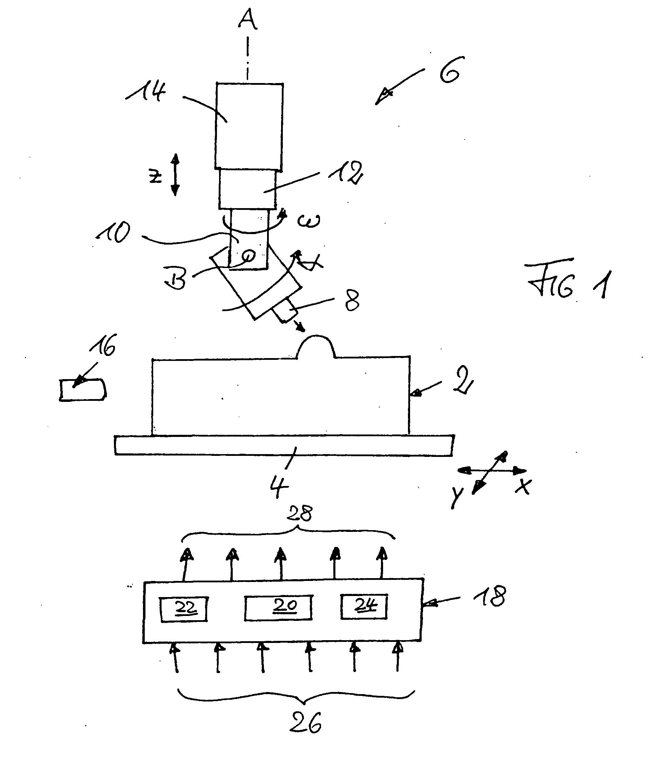

Gemäß Fig. 1 befindet sich ein Grundkörper 2 auf einer Transportplatte 4, die in einer senkrecht auf der Zeichenebene stehenden Ebene, d.h. in x- und y-Richtung, mittels nicht dargestellter Transporteinrichtungen bewegbar ist. Über der Transportplatte 4 befindet sich eine Tintenstrahldruckeinrichtung 6, die einen Tintenstrahlkopf 8 enthält, der an einem Arm 10 um eine im dargestellten Beispiel senkrecht auf der Zeichnungsebene stehende Achse B schwenkbar ist. Der Arm 10 ist an einer Konsole 12 um eine senkrechte Achse A schwenkbar gehalten, welche Konsole 12 wiederum relativ zu einem Zylinder 14 in Z-Richtung teleskopisch verschiebbar aufgenommen ist. Antriebseinrichtungen für die Schwenkbewegungen und die teleskopische Verschiebung sind nicht dargestellt.

Die Position des Grundkörpers 2 wird mittels einer Sensoreinrichtung 16 erfasst.

Zur Steuerung der Antriebe und des Tintenstrahldruckkopfes 8 ist ein elektronisches Steuergerät 18 vorgesehen, das einen Mikroprozessor 20 mit zugehörigen Programm- und Datenspeichern 22, 24 enthält. Eingänge 26 des Steuergerätes 18 sind mit der Sensoreinrichtung 16 verbunden; Ausgänge 28 sind mit den verschiedenen Antriebseinrichtungen und dem Tintenstrahldruckkopf verbunden.

Insgesamt ist es mit der beschriebenen Einrichtung möglich, den Tintenstrahldruckkopf 8 relativ zu dem Grundkörper 2 derart zu bewegen, dass der Tintenstrahldruckkopf 8 die gesamte Oberfläche des Grundkörpers 2 einschließlich dessen Seitenflächen unter Beibehaltung eines vorbestimmten Abstandes zwischen dem Tintenstrahldruckkopf 8 und der Oberfläche des Grundkörpers 2 und einem vorbestimmten Winkel zwischen dem vom Tintenstrahldruckkopf 8 abgespritzten Tintenstrahl und der Oberfläche des Grundkörpers 2 überstreicht. Wie ersichtlich, können auch Vorsprünge, Einbuchtungen oder sonstige Unebenheiten des Grundkörpers 2 auf diese Weise überstrichen werden.

Für die Antriebs- und Transporteinrichtungen, mit denen die Relativbewegungen zwischen Tintenstrahldruckkopf 8 und Oberfläche des Grundkörpers 2 erzielt werden, bestehen unterschiedlichste Möglichkeiten. Der Grundkörper 2 kann ortsfest sein und der Tintenstrahldruckkopf 8 kann bewegt und verschwenkt werden. Umgekehrt kann auch der Tintenstrahldruckkopf 8 ortsfest sein und der Grundkörper 2 verschwenkt und linear bewegt werden.

In dem Steuergerät 18 ist ein auf den Grundkörper 2 aufzubringendes Muster derart gespeichert, dass jedem Oberflächenpunkt des Grundkörpers 2 ein Farbpixel nach Art der Farbe und Menge zugeordnet ist. Die Rasterfeinheit (Pixelgröße) richtet sich nach den Erfordernissen und technischen Möglichkeiten. Für eine einwandfreie Zuordnung des augenblicklich vor dem Tintenstrahlkopf 8 befindlichen Oberflächenelements kann die Geometrie des Grundkörpers gesamthaft in dem Steuergerät 18 gespeichert werden, so dass mittels der Sensoreinrichtung 16 lediglich eine Referenzstellung des Grundkörpers 2 erfasst werden muss. In einer weitergebildeten Ausführungsform der Sensoreinrichtung können am Druckkopf 8 selbst Sensoren, beispielsweise Ultraschallsensoren, angebracht sein, die den Abstand zwischen Tintenstrahldruckkopf 8 und der Oberfläche des Grundkörpers 2 und deren Relativausrichtung erfassen. Eine beispielhafte Sensoreinrichtung ist in der eingangs genannten EP 0 931 649 A2 beschrieben.

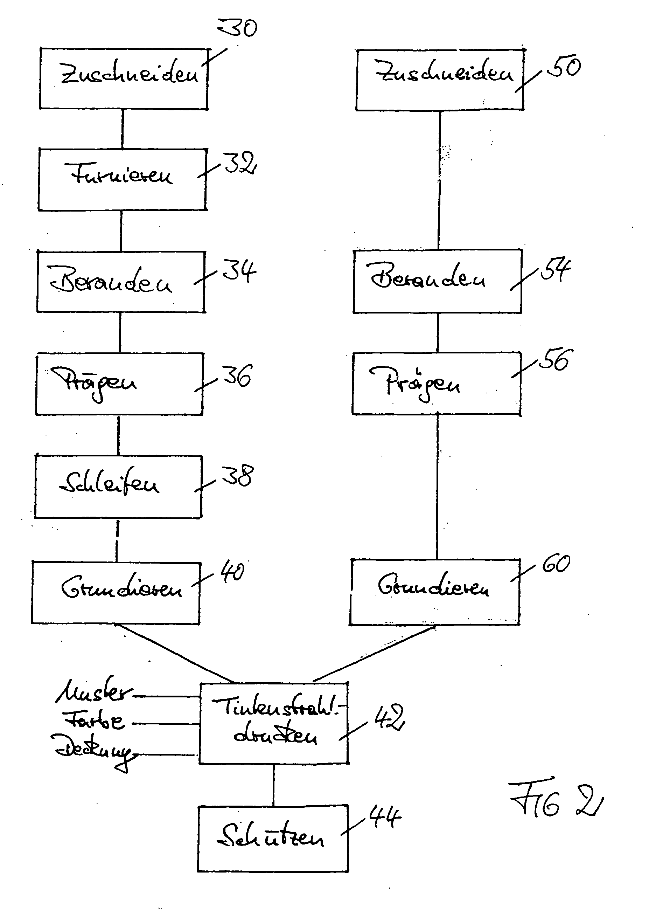

Anhand der Fig. 2 werden zwei typische Verfahrensabläufe zur Herstellung eines Bauteils mit einer Oberfläche vorbestimmten Aussehens beschrieben.

Der in Fig. 2 linke Ast entspricht der Herstellung eines Bauteils aus einem mit einer Echtholzoberfläche versehenen Grundkörper. Der rechte Ast entspricht der Herstellung eines Bauteils aus einem mit einer Kunststoffoberfläche versehenen Grundkörper.

Im Schritt 30 wird beispielsweise aus einer Pressspanplatte ein Rohkörper zugeschnitten, dessen Abmessungen etwa denen des herzustellenden Bauteils entsprechen. Der Rohkörper kann aus jedwelchem geeigneten Material bestehen, beispielsweise auch aus einer gewichtsgünstigen Honey-comb-Struktur, die aus Kunststoff oder Faserverbundwerkstoff besteht. Im dargestellten Beispiel wird angenommen, dass der Rohkörper plattenförmige Gestalt hat. Im Schritt 32 wird zumindest auf die Oberseite des Rohkörpers ein Echtholzfurnier in an sich bekannter Weise aufgebracht. Das Echtholzfurnier kann aus preiswertem Holz, beispielsweise Esche, Birke, Buche, Ulme oder anderen kostengünstigen Qualitätshölzern bestehen.

Im Schritt 34 werden die Seitenflächen des plattenförmigen, mit einem Furnier versehenen Rohkörpers, der beispielsweise einen Zentimeter dick ist, mit Randelementen versehen, die ebenfalls Holzfurniere sein können, aber auch durch Kunststoffumleimer usw. gebildet sein können. Weiter wird im Schritt 34 der Übergang zwischen den Randelementen und den anderen Flächen des Körpers mechanisch sauber bearbeitet, so dass die Abmessungen des nun einen Grundkörper bildenden Rohkörpers nach dem Schritt 34 dem des herzustellenden fertigen Bauteils entsprechen.

Im Schritt 36 wird die Oberfläche des Rohkörpers je nach Bedarf, beispielsweise durch Kalandrieren, mit einer Prägung versehen.

Im Schritt 38 wird die Oberfläche mit einer auf die nachfolgenden Schritte abgestimmten Rauhigkeit geschliffen.

Im Schritt 40 wird die beschliffene Oberfläche mit einer Grundierungsschicht versehen. Das Grundieren kann in einer ähnlich der Fig. 1 ausgebildeten Vorrichtung erfolgen, wobei der Tintenstrahldruckkopf 8 durch einen Spritzkopf ersetzt ist. Das Grundieren kann auch in anderen Vorrichtungen erfolgen, beispielsweise durch Eintauchen des Grundkörpers in Grundierungsflüssigkeit.

Der Grundierungsschritt 40 dient in erster Linie dazu, dass die in dem nachfolgenden Tintenstrahlbedruckungsschritt 42 aufgebrachte Tinte auf der Oberfläche gut haftet und in vorbestimmter Weise verläuft. In dem Tintenstrahldruckverfahrensschritt wird auf die Oberfläche ein Muster aufgebracht, das im wesentlichen durch drei Datensätze bestimmt ist, nämlich
- die Geometrie des Musters, die das Musteromament beispielsweise in schwarz-weiß als Linienmuster mit dem Schwärzungsgrad der einzelnen Oberflächenelemente festlegt,
- die Farbe des Musters, die die Farbe der einzelnen Oberflächenelemente festlegt, und
- der Deckungsgrad des Musters, der die Farbmenge mit der Maßgabe festlegt, inwieweit die Oberfläche des noch nicht bedruckten Grundkörpers durch die Druckschicht hindurchscheinen soll. Es versteht sich, daß der Deckungsgrad sowohl durch die Deckfähigkeit der Tinte als auch durch die aufgebrachte Tintenmenge bestimmt wird.

An den Schritt 42 schließt sich ein Schritt 44 an, in dem der tintenstrahlbedruckte Grundkörper mit einer Schutzschicht versehen wird, die durch Spritzen, Rollen, Tauchen usw. aufgebracht werden kann.

Wenn von einem Rohkörper beziehungsweise einer Platte mit Kunststoffoberfläche, beispielsweise einer melaminbeschichteten Platte ausgegangen wird, die flächig nicht furniert werden soll, wird in einem Schritt 50 eine Rohplatte ausgeschnitten, die im Schritt 54 mit einer Umrandung, beispielsweise einem Umleimer, versehen wird. Zusätzlich wird im Schritt 54 der Übergang zwischen dem Umleimer und der Plattenoberfläche mechanisch sauber bearbeitet, so dass die Gestalt des hergestellten Grundkörpers dem eines herzustellenden Bauteils entspricht.

Im Schritt 56 wird der Grundkörper im Bedarfsfall mit einer Prägung versehen.

Auf den Schritt 56 folgt ein Grundierschritt 60, in dem die Oberfläche des Grundkörpers derart grundiert wird, dass die im nachfolgenden Tintenstrahlbedruckungsschritt 42 aufgebrachte Tinte einwandfrei auf der Oberfläche haftet. An den Schritt 42 schließt sich zur Fertigbearbeitung der Schutzschritt 44 an.

Im folgenden werden einige Aspekte der beschriebenen Schritte erläutert.

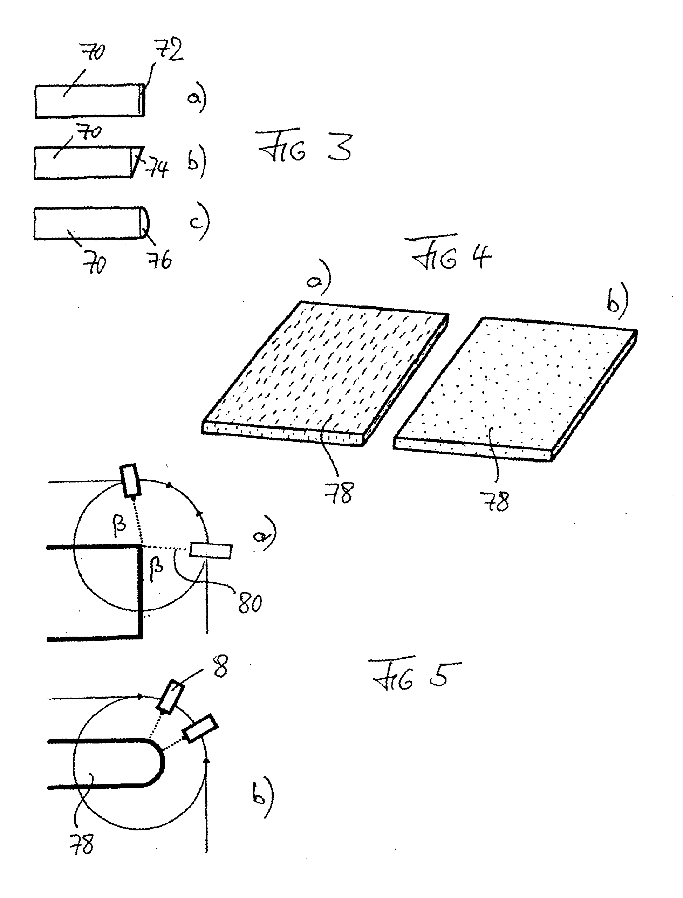

Fig. 3 zeigt unterschiedliche, an einem Rohkörper 70 ausgebildete Randelemente. Fig. 3a zeigt ein Randelement 72, das als Leiste bzw. Streifen einheitlicher Dicke ausgebildet ist. Das Randelement gemäß Fig. 3b weist dreieckigen Querschnitt auf. Das Randelement 76 ist gerundet.

Nach Aufbringen der Randelemente wird der Übergangsbereich zwischen dem Randelement und dem Rohkörper jeweils sauber mechanisch bearbeitet, so dass der hergestellte Grundkörper keine Unsauberkeiten im Übergang zu dem bzw. zu den Randelementen hat. Bei geeigneter Beschaffenheit des Rohkörpers kann dessen Rand auch ohne jedwelches gesondert aufgebrachtes Randelement lediglich durch mechanische Bearbeitung geformt werden.

Fig. 4 verdeutlicht in den Figurenteilen a) und b) unterschiedliche Oberflächenbeschaffenheiten des jeweiligen Grundkörpers 78.

Gemäß Fig. 4a sind in die Oberflächen strich- bzw. schlitzförmige Einschnitte geprägt. In Fig. 4b ist die Oberfläche mit punktförmigen Vertiefungen bzw. Löchern geprägt. Die Strukturierung kann je nach Verwendungszweck des herzustellenden Bauteils und angestrebtem Oberflächenaussehen unterschiedlich sein; reliefartige Oberflächenstrukturen, wie sie beispielsweise durch Grobschleifen hergestellt werden können, sind ebenso möglich wie Feinkalandrierungen. Durch die Prägungen 36 bzw. 56 wird das Aussehen der tintenstrahlbedruckten Oberfläche maßgeblich mitbeeinflusst, da die Prägung nach dem Bedrucken wegen der sich dort sammelnden Tinte im allgemeinen verstärkt in Erscheinung tritt.

Der Schleifschritt 38 beeinflusst das Aussehen der nachfolgenden Tintenstrahlbedruckung ebenfalls stark. Ein grober Schliff führt zu einem Verlaufen der Farbpunkte. Mit zunehmend feinerem Schliff lassen sich zunehmend scharf gezeichnete Musterungen aufbringen.

Die im Schritt 40 bzw. 60 aufgebrachte Grundierung dient nicht nur einer guten Haftung der aufgedruckten Tinte. Mit der Grundierung kann auch das Saugverhalten der Oberfläche beeinflusst werden, was zusätzlich zur Menge und zum Farbstoffgehalt der Tinte Einfluss darauf hat, ob das durch Tintenstrahlbedruckung aufgebrachte Muster voll deckend oder lediglich lasierend ist.

Fig. 5 verdeutlicht einen Aspekt, der beim Bedrucken von Rändern einer Platte oder stark gekrümmten Oberflächenbereichen wichtig ist.

Gemäß Fig. 5a werden Kanten vorzugsweise derart bedruckt, dass der Tintenstrahl 80 der gerade bedruckten Fläche nicht auf die benachbarte Fläche gelangt. Dies wird dadurch erreicht, dass der Winkel β zwischen dem Tintenstrahl und der gerade bedruckten Oberfläche etwas kleiner als 90° ist, so dass die nicht bedruckte Oberfläche abgeschattet ist. Über dem abgeschatteten Bereich kann, um völlig sicherzustellen, dass sich dort keine Tinte absetzt, eine Absaugeinrichtung, beispielsweise eine Unterdruckdüse, angeordnet sein.

Wenn der Tintenstrahldruckkopf 8 gemäß Fig. 5b sich mit einem vorbestimmten Abstand und unter Beibehaltung einer vorgegebenen Ausrichtung, vorzugsweise eines etwa rechten Winkels, zum gerade bedruckten Oberflächenelement längs eines gerundeten Randes eines Grundskörpers 78 relativ zu diesem bewegt, erfolgt die Tintenstrahlbedruckung vorzugsweise derart, dass die auf eine Oberflächeneinheit gelangende Tintenmenge unabhängig von der Krümmung der Oberfläche des Grundkörpers 78 ist.

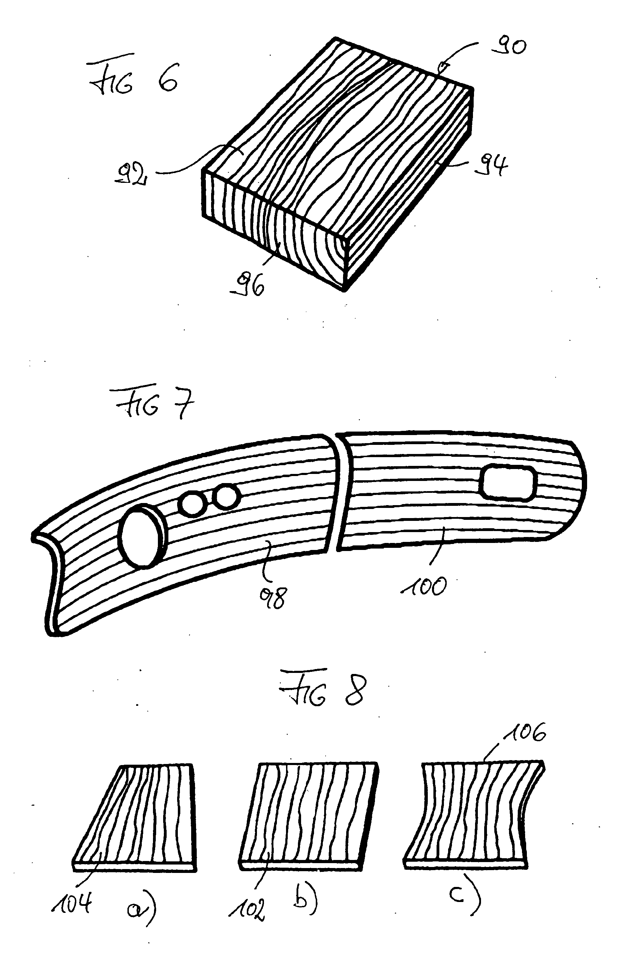

Fig. 6 zeigt eine perspektivische Ansicht eines nach dem erfindungsgemäßen Verfahren herstellbaren Bauteils, beispielsweise eines einen Teil einer Frontseite einer Küche bildenden Deckels. Das Bauteil 90 weist eine Oberseite 92 und zwei Seitenflächen 94 und 96 auf. Wie ersichtlich, sind die Holzmaserungsmuster auf die Oberseite 92 und die Seitenflächen 94 und 96 derart ausgebildet, dass das Aussehen einem Echtholzbrett entspricht, das aus einem Baum ausgeschnitten ist, wobei die Schnittrichtungen parallel zur Seitenfläche 96 und senkrecht zur Seitenfläche 94 bzw. der Oberseite 92 liegen. Das Holzmaserungsmuster der Seitenfläche 96 entspricht somit einem Stirnholz. Wie ersichtlich, schließen die Maserungen der Seitenflächen 94 und 96 an die Maserung der Oberseite 92 stetig an, d.h. die Maserungslinien gehen in den Kanten ineinander über.

Nach dem erfindungsgemäßen Verfahren lassen sich allein durch entsprechende Datensätze im Tintenstrahldruckschritt 42 unterschiedlichste Holzarten mit unterschiedlichsten Nuancierungen in einem von Echtholz nicht unterscheidbaren Aussehen darstellen. Besonders gut gelingt dies, wenn der Schritt 42 (Fig. 2) auf einem mit Naturholz furnierten Grundkörper ausgeführt wird. Das Holzfurnier verleiht dem bedruckten Grundkörper ein Echtholzaussehen, wobei eine Eigenmaserung der Furnierung durch die aufgedruckte Maserung derart überdeckt wird, dass sie nicht mehr in Erscheinung tritt. Durch zweckentsprechende Prägung, Schleifung und Grundierung ist der Grundkörper derart vorbereitet, dass das aufgebrachte Muster von einer Echtholzmaserung nicht unterscheidbar ist. Die im Schritt 44 aufgebrachte Schutzschicht, beispielsweise transparenter Zweikomponentenlack mit dem jeweiligen Bedarf entsprechendem Glanz, macht das erfindungsgemäß hergestellte Bauteil strapazierfähig und verschleißfest.

Für die Datengewinnung der in dem Steuergerät gespeicherten Muster gibt es verschiedene Möglichkeiten. Beispielsweise können die Muster unmittelbar von einer Vorlage des Grundkörpers in Massivholz abgenommen und als Datensätze zur Steuerung des Tintenstrahldruckkopfes ähnlich wie beim Ausdrucken einer Farbvorlage verwendet werden. Alternativ können Muster nach entsprechenden Vorlagen rechnerisch generiert werden, so dass unterschiedlichste Muster, die nicht auf Holzmaserungsmuster begrenzt sind, erzeugt werden können. Dabei erfolgt die Datenberechnung jeweils derart, dass die Musterkonturen (und Farben) entsprechend den jeweiligen Schnitten an den Kanten (die auch mit Krümmungsradien ausgebildet sein können), ineinander übergehen. In Datenspeichern kann ein Mustervorrat unterschiedlichster Hölzer oder anderweitiger geometrischer oder räumlicher Muster gespeichert sein, die jeweils entsprechend der gewünschten Größe ausgelesen und zum Drucken benutzt werden.

Wenn mit mit Holzfurnieren versehenen Grundkörpern gearbeitet wird, kann durch die Farbe oder Färbung des Furniers das Aussehen des fertigen Grundkörpers beeinflusst werden. Weiß gebleichte Furniere führen zu einer klareren Farbprägung des fertigen Musters. Getönte Furniere ergeben weniger ausgeprägte, homogenere Färbungen des fertigen Musters, wenn nicht mit hohem Deckungsgrad gearbeitet wird.

Mit dem beschriebenen Verfahren können unterschiedlichste Bauteile hergestellt werden, die von dem einfachen, nur auf einer Oberflächenseite bedruckten Parkettelement (das entsprechend verschleißfest beschichtet ist), bis zu komplizierter geformten dreidimensionalen Bauteilen reichen, beispielsweise Innenraumdekorteilen in Kraftfahrzeugen.

Fig. 7 zeigt ein Beispiel zweier erfindungsgemäß mit Holzmaserungsmustern bedruckter Fahrzeuginnenraumdekorbauteile 98 und 100. Wie ersichtlich, sind die Holzmaserungsmuster in dem Bereich, in dem die Bauteile 98 und 100 aneinander angrenzen, derart aufeinander abgestimmt, dass sie sich entsprechen bzw. ineinander übergehen. Auf diese Weise entsteht der Eindruck, dass die beiden Bauteile 98 und 100 aus einem einzigen Naturholzstück hergestellt sind, was die Wertigkeit des Aussehens erhöht.

Fig. 8 zeigt, wie durch entsprechende Datenverarbeitung gespeicherte Muster an die Geometrie des herzustellenden Bauteils angepasst werden können. Fig. 8b zeigt ein Grundmuster eines rechteckigen Bauteils 102. Fig. 8a zeigt das dem Bauteil 102 entsprechende Muster auf einem Bauteil 104, das gemäß der Figur sich nach oben verjüngt. Die Musterlinien sind entsprechend der Verjüngung des Bauteils komprimiert.

Fig. 8c zeigt ein Bauteil 106, das in seinem mittleren Bereich eingeschnürt ist. Das Muster ist entsprechend der Einschnürung des Bauteils eingeschnürt. Es versteht sich, dass die Abwandlungen des auf dem Bauteil 102 vorhandenen Musters entsprechend dem Bauteil 104 und 106 allgemein nicht mehr einem natürlichen Massivholzmuster entsprechen; die mit der Kompression der Muster erzeugten Effekte bewirken jedoch ein ästhetisch ansprechendes Aussehen der Bauteile.

Die Erfindung kann in unterschiedlichster Weise abgeändert werden. Es können verschiedene Verfahrensschritte in unterschiedlichster Weise miteinander kombiniert werden, so dass, mit Ausnahme des Tintenstrahldruckverfahrens, nur einzelne Schritte der Abläufe gemäß Fig. 2 vorhanden sein müssen. Im gemäß Fig. 2 linken Ast kann, wenn der Ausgangskörper beispielsweise ein Massivholzkörper aus einfachem Holz ist, die Furnierstufe, die Berandungsstufe und die Prägestufe fehlen. Im rechten Ast kann zusätzlich eine Furnierstufe und eine Schleifstufe vorgesehen sein. Die Prägestufen können in beiden Ästen fehlen usw.

Die Feinbearbeitung der Randelemente derart, dass beim Bedrucken der Übergang zwischen dem Randelement und dem Rohkörper nicht mehr sichtbar ist, kann innerhalb des Schleifschrittes 38 folgen usw.

Als Tinten werden beispielsweise Pigmenttinten verwendet, wie sie auch in Plottem eingesetzt werden. Für die Grundierung von Kunststoffoberflächen werden handelsübliche Primer bzw. Haftvermittler eingesetzt. Für die Holzgrundierung werden ggfs. übliche Holzgrundierungsflüssigkeiten eingesetzt. Für die Schutzschicht eignen sich übliche transparente Lacke, die zu einer hochfesten Schicht härten. Bei Verwendung als Parkettelement können übliche Parkettversiegelungen verwendet werden.

Mit der Erfindung werden zahlreiche Vorteile erzielt, die nicht nur das Aussehen der hergestellten Bauteile, sondern vor allem deren Kosten betreffen. Aus kostengünstigen Rohteilen können Bauteile mit höchstwertigstem Aussehen hergestellt werden, die höchste Qualitätsanforderungen erfüllen. Bezüglich der Lagerhaltung ist lediglich ein Vorrat mit geringer Vielfalt (Größen, Material des Rohkörpers) erforderlich. Die kundenrelevante Vielfalt hinsichtlich Holzart, Oberflächendesign und so weiter wird erst kurz vor der Auslieferung aufgrund des Bestelleingangs durch Tintenstrahlbedruckung erzielt.

### Bezugszeichenliste

- 2: Grundkörper
- 4: Transportplatte
- 6: Tintenstrahldruckeinrichtung
- 8: Tintenstrahldruckkopf
- 10: Arm
- 12: Konsole
- 14: Zylinder
- 16: Sensoreinrichtung
- 18: Steuergerät
- 20: Mikroprozessor
- 22: Speicher
- 24: Speicher
- 26: Eingänge
- 28: Ausgänge
- 72: Randelement
- 74: Randelement
- 76: Randelement
- 78: Grundkörper
- 80: Tintenstrahl
- 90: Bauteil
- 92: Oberseite
- 94: Seitenfläche
- 96: Seitenfläche
- 98: Bauteil
- 100: Bauteil
- 102: Bauteil
- 104: Bauteil
- 106: Bauteil

## Patentansprüche

1. Verfahren zum Herstellen eines Bauteils mit einer Oberfläche vorbestimmten Aussehens, enthaltend die Schritte
- Herstellen eines plattenförmigen Grundkörpers mit einer Oberseite, einer Unterseite und wenigstens einer mit der Oberseite und der Unterseite einen Winkel von etwa 90° bildenden Seitenfläche und
- Tintenstrahlbedrucken der Oberseite und wenigstens einer Seitenfläche,
**dadurch gekennzeichnet, dass**
wenigstens die eine Seitenfläche mit einem Randelement versehen wird,
die Oberseite und die Seitenfläche des Randelements mechanisch fertig bearbeitet werden und nach der mechanischen Fertigbearbeitung tintenstrahlbedruckt werden, wobei
ein durch die Tintenstrahlbedruckung aufgebrachtes Muster stetig von der Oberseite zu der Seitenfläche übergeht.

2. Verfahren nach Anspruch 1, **dadurch gekennzeichnet, dass** das Muster ein Holzmaserungsmuster ist.

3. Verfahren nach Anspruch 1 oder 2, **dadurch gekennzeichnet, dass** die Oberseite oder die Seitenfläche mit einem Holzmaserungsmuster versehen wird, das einem Schnitt durch ein Massivholz mit einer zur Achse der Jahresringe parallelen Komponente entspricht, und die Seitenfläche oder die Oberseite mit einer Holzmaserung versehen wird, die einem Schnitt durch ein Massivholz mit einer zur Achse der Jahresringe senkrechten Komponente entspricht.

4. Verfahren nach einem der Ansprüche 1 bis 3, **dadurch gekennzeichnet, dass** der Randbereich der Oberseite oder der Seitenfläche mit einem derart gerichteten Tintenstrahl beschichtet wird, dass der anschließende Randbereich der anderen Seitenfläche oder der Oberseite abgeschattet wird.

5. Verfahren nach einem der Ansprüche 1 bis 4, **dadurch gekennzeichnet, dass** das Tintenstrahlverfahren derart durchgeführt wird, dass die je Flächeneinheit auf die Oberfläche aufgebrachte Tintenmenge unabhängig von der Krümmung der Oberfläche ist.

6. Verfahren nach einem der Ansprüche 1 bis 5, **dadurch gekennzeichnet, dass** auf das durch Tintenstrahlbedruckung hergestellte Muster eine Schutzschicht aufgebracht wird.

7. Verfahren nach einem der Ansprüche 1 bis 6, **dadurch gekennzeichnet, dass** das plattenförmige Bauteil vor der Tintenstrahlbedruckung mit einem Holzfurnier versehen wird.

8. Verfahren nach Anspruch 7, **dadurch gekennzeichnet, dass** das Holzfurnier vor der Tintenstrahlbedruckung mit einem Muster in einer homogenen Grundfarbe getönt wird.

9. Verfahren nach Anspruch 7 oder 8, **dadurch gekennzeichnet, dass** das Holzfurnier vor der Tintenstrahlbedruckung mit einer mechanischen Prägung versehen wird.

10. Verfahren nach Anspruch 9, **dadurch gekennzeichnet, dass** das mit einer mechanischen Prägung versehene Holzfurnier vor der Tintenstrahlbedruckung zu einer vorbestimmten Rauhigkeit geschliffen wird.

11. Verfahren nach einem der Ansprüche 1 bis 6, **dadurch gekennzeichnet, dass** der Grundkörper eine Kunststoffoberfläche aufweist, die vor der Tintenstrahlbedruckung mechanisch bearbeitet wird.

12. Verfahren nach einem der Ansprüche 1 bis 11, **dadurch gekennzeichnet, dass** in einem Arbeitsschritt unmittelbar vor der Tintenstrahlbedruckung auf das zu bedruckende Bauteil eine Grundierung aufgebracht wird.

## Claims

1. A method of producing a component with a predetermined surface appearance, comprising the steps of
- producing a panel-shaped base member with an upper side, an underside, and at least one lateral surface forming an angle of approximately 90° with the upper side and the underside, and
- ink-jet printing the upper side and at least one lateral surface,
**characterised in that**
the at least one lateral surface is provided with an edge element, the upper side and the lateral surface of the edge element are finish-machined and are ink-jet printed after the finish-machining, wherein
a pattern applied by the ink-jet printing merges continuously from the upper side into the lateral surface.

2. A method according to Claim 1, **characterised in that** the pattern is a wood grain pattern.

3. A method according to Claim 1 or 2, **characterised in that** the upper side or the lateral surface is provided with a wood grain pattern which corresponds to a section through a solid timber with a component parallel to the axis of annual growth rings, and the lateral surface or the upper side is provided with a wood grain which corresponds to a section through a solid timber with a component perpendicular to the axis of the annual growth rings.

4. A method according to any one of Claims 1 to 3, **characterised in that** the edge region of the upper side or of the lateral surface is coated with an ink jet directed in such a way that the adjoining edge region of the other lateral surface or the upper side is shaded.

5. A method according to any one of Claims 1 to 4, **characterised in that** the ink-jet process is carried out in such a way that the quantity of ink applied to the surface per unit of area is independent of the curvature of the surface.

6. A method according to any one of Claims 1 to 5, **characterised in that** a protective layer is applied to the pattern created by the ink-jet printing.

7. A method according to any one of Claims 1 to 6, **characterised in that**, before the ink-jet printing, the panel-shaped component is provided with a wood veneer.

8. A method according to Claim 7, **characterised in that**, before the ink-jet printing, the wood veneer is tinted with a pattern in a homogeneous basic colour.

9. A method according to Claim 7 or 8, **characterised in that**, before the ink-jet printing, the wood veneer is provided with a mechanical embossing.

10. A method according to Claim 9, **characterised in that**, before the ink-jet printing, the wood veneer provided with a mechanical embossing is ground to a predetermined roughness.

11. A method according to any one of Claims 1 to 6, **characterised in that** the base member has a synthetic material surface which is machined before the ink-jet printing.

12. A method according to any one of Claims 1 to 11, **characterised in that** in a process step immediately before the ink-jet printing a primer coating is applied to the component to be printed.

## Revendications

1. Procédé permettant de réaliser un élément structurel ayant une apparence de surface prédéterminée comprenant les étapes suivantes
- réalisation d'un corps de base en forme de plaque avec un côté supérieur, un côté inférieur et au moins une face latérale formant avec le côté supérieur et le côté inférieur un angle d'environ 90 ° et
- impression à jet d'encre du côté supérieur et d'au moins une face latérale,
**caractérisé en ce que**
au moins une face latérale est pourvue d'un élément de bord,
le côté supérieur et la face latérale de l'élément de bord sont finis mécaniquement et sont imprimés par jet d'encre après la finition mécanique,
un modèle appliqué par l'impression à jet d'encre passant en permanence du côté supérieur à la face latérale.

2. Procédé selon la revendication 1, **caractérisé en ce que** le modèle est un modèle à madrure.

3. Procédé selon la revendication 1 ou 2, **caractérisé en ce que** le côté supérieur ou la face latérale est pourvue d'un modèle à madrure qui correspond à une coupe d'un bois massif avec une composante parallèle à l'axe des cernes et la face latérale ou le côté supérieur est pourvu d'une madrure qui correspond à une coupe d'un bois massif avec une composante perpendiculaire à l'axe des cernes.

4. Procédé selon l'une quelconque des revendications 1 à 3, **caractérisé en ce que** la zone de bord du côté supérieur ou de la face latérale est revêtue d'un jet d'encre dirigé de telle manière que la zone de bord contiguë de l'autre face latérale ou du côté supérieur soit obscurcie.

5. Procédé selon l'une quelconque des revendications 1 à 4, **caractérisé en ce que** le procédé d'impression à jet d'encre est réalisé de telle manière que la quantité d'encre appliquée par unité de surface sur la surface ne dépende pas de la courbure de la surface.

6. Procédé selon l'une quelconque des revendications 1 à 5, **caractérisé en ce qu'**une couche de protection est appliquée sur le modèle fabriqué par impression à jet d'encre.

7. Procédé selon l'une quelconque des revendications 1 à 6, **caractérisé en ce que** l'élément structurel en forme de plaque est pourvu d'un contreplacage avant l'impression à jet d'encre.

8. Procédé selon la revendication 7, **caractérisé en ce que** le contreplacage est teinté avant l'impression à jet d'encre avec un modèle dans une couleur primaire homogène.

9. Procédé selon la revendication 7 ou 8, **caractérisé en ce que** le contreplacage est pourvu d'une gravure mécanique avant l'impression à jet d'encre.

10. Procédé selon la revendication 9, **caractérisé en ce que** le contreplacage pourvu d'une gravure mécanique est rectifié avant l'impression à jet d'encre pour former une rugosité prédéterminée.

11. Procédé selon l'une quelconque des revendications 1 à 6, **caractérisé en ce que** le corps de base présente une surface plastique qui est usinée mécaniquement avant l'impression à jet d'encre.

12. Procédé selon l'une quelconque des revendications 1 à 11, **caractérisé en ce qu'**un apprêt est directement appliqué dans une étape de travail avant l'impression à jet d'encre sur l'élément structurel à imprimer.
